# EUROPÄISCHE PATENTSCHRIFT

(11) **EP 0 907 803 B1**
(45) Veröffentlichungstag und Bekanntmachung des Hinweises auf die Patenterteilung: **12.12.2001**
(21) Anmeldenummer: 97931707.0
(22) Anmeldetag: 05.07.1997
(51) Int. Cl.: E02D 31/00

(54) **KAPILLARSPERRE ZUR OBERFLÄCHENABDICHTUNG**
CAPILLARY BARRIER FOR SEALING EXTERNAL SURFACES
BARRIERE CAPILLAIRE POUR ETANCHEIFIER DES SURFACES

(30) Priorität: 05.07.1996 DE 19627092
(43) Veröffentlichungstag der Anmeldung: 14.04.1999
(73) Patentinhaber: Bilfinger Berger AG, 68165 Mannheim (DE)
(72) Erfinder: VON DER HUDE, Nico, D-64293 Darmstadt (DE)
(74) Vertreter: Rückert, Susanne
(86) Internationale Anmeldenummer: DE9701420
(87) Internationale Veröffentlichungsnummer: WO9801630

(56) Entgegenhaltungen:
- EP-A- 0 443 567
- US-A- 3 665 720
- US-A- 3 690 227
- US-A- 3 925 993

## Beschreibung

Die Erfindung betrifft eine Kapillarsperre zur Oberflächenabdichtung, insbesondere von Deponien und Altlasten, mit mindestens einem Kapillarblock, wobei der Kapillarblock durch eine Schicht aus grobkörnigem Material gebildet ist, und mit mindestens einer auf dem Kapillarblock angeordneten Kapillarschicht aus feinkörnigem Material.

Aus der Praxis sind Oberflächenabdichtungen in Form von mineralisch-bindigen Schichten aus verdichteten tonhaltigen Materialien bekannt. Die Dichtwirkung beruht hier darauf, daß der Porenraum einer solchen Schicht im Idealfall vollständig mit Wasser gefüllt ist und dieses Wasser durch Adhäsion und Kohäsion an die Bodenkörner gebunden ist. Die mineralisch-bindige Schicht kann daher so gut wie nicht durchströmt werden.

Alternativ zu dieser Dichtungsart sind aus der Praxis auch sogenannte Kapillarsperren bekannt, die auf dem physikalischen Phänomen beruhen, daß sich eine Schicht feinen Sandes zunächst weitgehend mit Sickerwasser aufsättigt, bevor das Sickerwasser an eine darunterliegende grobkörnigere Schicht abgegeben wird. Eine solche Kapillarsperre wird bspw. in der Zeitschrift "Wasser und Boden" 1995, Nr. 11, S. 58-62 beschrieben. Eine Kapillarsperre besteht üblicherweise aus mindestens einer mit einer Neigung, in der Regel der am Einsatzort vorliegenden Hangneigung, eingebauten grobkörnigen Schicht, dem sogenannten Kapillarblock, und einer darüberliegenden feinkörnigen Schicht, der Kapillarschicht. Das grobkörnige Material und das feinkörnige Material sollen eine möglichst steile und weit auseinanderliegende Sieblinie aufweisen, wobei das grobkörnige Material gegenüber dem feinkörnigen Material filterstabil sein sollte. Ist diese Voraussetzung nicht gegeben, so kann zwischen dem Kapillarblock und der Kapillarschicht zusätzlich noch eine Trennhilfe, beispielsweise in Form eines geotextilen Materials, angeordnet werden.

Die Dicht- bzw. Sperrwirkung der Kapillarsperre beruht auf dem deutlichen Porensprung zwischen der Kapillarschicht und dem Kapillarblock, nämlich an der Kontaktfläche von feinkörnigem und grobkörnigem Material. Der Porenraum in der feinkörnigen Kapillarschicht und im grobkörnigen Kapillarblock kann jeweils in Form von Kapillarröhren mit kleiner Querschnittsfläche im Falle der Kapiliarschicht und mit relativ großer Querschnittsfläche im Falle des Kapillarblocks angenommen werden. Das in den dünneren Kapillaren gehaltene Wasser bildet nach unten Menisken gegen die dickeren Kapillaren, so daß das Wasser in der Kapillarschicht gehalten wird und allenfalls in geringen Mengen in das grobkörnige Material des Kapillarblocks einsickert. In der Praxis müssen die einzelnen Parameter einer Kapillarsperre, wie die Materialien, die Schichtdicken, das Gefälle und die Feldlänge, geeignet gewählt und aufeinander abgestimmt werden.

Wesentliche Eigenschaft einer Kapillarsperre ist demnach, daß sowohl das feinkörnige als auch das grobkörnige Material ungesättigt sind, d.h. die Poren zwischen den Körnern teils mit Luft und teils mit Wasser gefüllt sind.

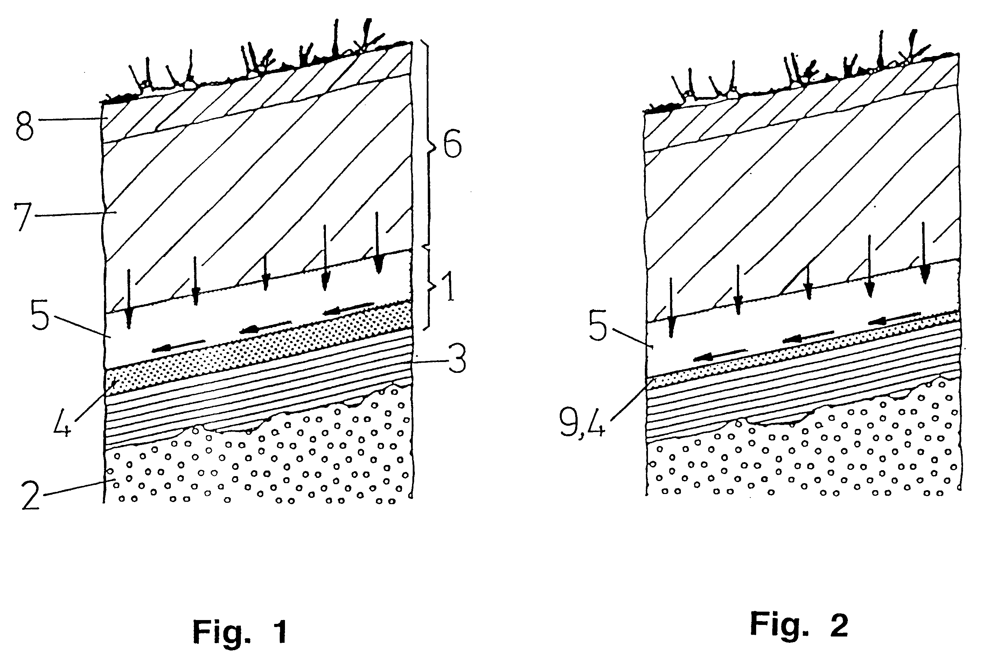

Figur 1 zeigt beispielhaft eine Kapillarsperre 1, wie sie aus dem Stand der Technik bekannt ist. Die Kapillarsperre 1 ist auf einem Deponiehang angeordnet, der typischerweise aus einer Altlast 2 besteht, auf die dann eine Ausgleichsschicht 3 aufgebracht ist.

Die eigentliche Kapillarsperre 1 besteht hier aus einer auf die Ausgleichsschicht 3 aufgeschütteten Schicht 4 aus grobkörnigem Material, die den Kapillarblock 4 bildet, und einer direkt auf den Kapillarblock 4 aufgeschütteten Schicht 5 aus feinkörnigem Material, der sogenannten Kapillarschicht 5. Das grobkörnige Material wird in der Praxis einfach auf die Ausgleichsschicht 3 des abzudichtenden Hanges geschüttet, wobei ein Kapillarblock 4 der Mächtigkeit von ca. 30 cm erzeugt wird. Diese Mächtigkeit soll gewährleisten, daß ein flächiger, zusammenhängender, den abzudichtenden Hang vollständig überdeckender Kapillarblock 4 vorliegt, der in allen Bereichen eine Mindestdicke aufweist, auch wenn der Untergrund Unebenheiten aufweist. Auf den so gebildeten Kapillarblock 4 wird dann das Material der Kapillarschicht 5 geschüttet. Die Mächtigkeit der Kapillarschicht 5 sollte nicht geringer als 40 cm sein, da die Kapillarschicht 5 zumindest teilweise als Drainageschicht dient, innerhalb der das Sickerwasser aus der darüberliegenden Wasserhaushaltsschicht 6 abgeleitet wird.

Wie bereits erwähnt befindet sich über der Kapillarsperre 1 die Wasserhaushaltsschicht 6, die sich aus Abdeckboden 7 und Oberboden 8 zusammensetzt. Über die Vegetation auf dem Oberboden 8 soll ein möglichst großer Anteil des Niederschlags evapotranspiriert werden. Bei Starkregen soll die Vegetation auf dem Oberboden 8 außerdem einen erosionssicheren Oberflächenabfluß gewährleisten. Daneben hat die Wasserhaushaltsschicht 6 die Aufgabe, den Niederschlag zwischenzuspeichern und darüber hinaus absickerndes Wasser vergleichmäßigt an die Kapillarschicht 5 abzugeben.

In Verbindung mit Figur 1 sei noch angemerkt, daß hier nur eine einfachste Realisierung einer Kapillarsperre dargestellt ist. Bekannt sind außerdem auch Kapillarsperren, die in Kombination mit anderen Dichtungsmaßnahmen realisiert werden.

Die Realisierung der bekannten Kapillarsperre hat sich in der Praxis als problematisch erwiesen, da die Materialien des Kapillarblocks und der Kapillarschicht für eine optimale Wirkungsweise der Kapillarsperre aufeinander abgestimmt sein müssen, und zwar sowohl hinsichtlich der Materialeigenschaften als auch hinsichtlich der jeweiligen Korngrößenverteilungen. Als Material für die Kapillarschicht wird in der Regel feinkörniger Sand verwendet, der zum einen kostengünstig ist und zum anderen in nahezu jeder Region bzw. an nahezu jedem Einsatzort zur Verfügung steht. Im Gegensatz dazu ist das Auffinden von geeigneten Materialien für den Kapillarblock oftmals problematisch. In der Vergangenheit konnte die Realisierung einer Kapillarsperre schon alleine daran scheitern, daß am Einsatzort kein geeignetes Material bzw. keine hinreichenden Mengen eines geeigneten Materials für den Kapillarblock zur Verfügung standen. Außerdem waren aufgrund der Verwendung von unterschiedlichen, standortspezifischen Materialien für den Kapillarblock immer zeit- und kostenintensive Vorversuche und Machbarkeitsstudien erforderlich.

Ausgehend von den aus der Praxis bekannten Problemen liegt der Erfindung die Aufgabe zugrunde, eine Kapillarsperre der in Rede stehenden Art anzugeben, für deren Realisierung die Menge an grobkörnigem Material - entsprechend den physikalischen Anforderungen an den Kapillarblock im Rahmen der Kapillarsperre - erheblich reduziert werden kann.

Die erfindungsgemäße Kapillarsperre löst die voranstehende Aufgabe durch die Merkmale des Patentanspruchs 1. Danach ist die eingangs genannte Kapillarsperre derart ausgebildet, daß die Schichtanordnung des den Kapillarblock bildenden grobkörnigen Materials schon vor dem Einbau stabilisiert ist.

Erfindungsgemäß ist zunächst erkannt worden, daß die Sperrwirkung der Kapillarsperre auch schon mit einem relativ dünnen Kapillarblock von einigen Zentimetern Mächtigkeit erzielbar ist, da es hierfür lediglich auf den Porensprung an der Grenzfläche zwischen der Kapillarschicht und dem Kapillarblock ankommt. Es ist ferner erkannt worden, daß der Kapillarblock aber in jedem Falle eine zusammenhängende, geschlossene Schicht bilden sollte, um Leckagen in der Kapillarsperre zu vermeiden. Erfindungsgemäß ist schließlich noch erkannt worden, daß eine derartige geschlossene Schicht auch bei relativ unebenem Untergrund nicht unbedingt besonders mächtig sein muß, wenn das Schichtmaterial, hier das grobkörnige Material des Kapillarblocks, zumindest während des Einbaus der Kapillarsperre und während der sich anschließenden Setzungsphase lagestabilisiert wird.

In vorteilhafter Weise ist die Dicke des Kapillarblocks so bemessen, daß hinreichend viele Kornlagen des grobkörnigen Materials zur Ausbildung der Sperrwirkung zwischen dem Kapillarblock und der Kapillarschicht vorhanden sind. In diesem Falle ist die Menge an grobkörnigem Material für den Kapillarblock so weit wie möglich reduziert, nämlich so weit, daß gerade die für die Sperrwirkung der Kapillarsperre verantwortlichen physikalischen Erfordernisse erfüllt sind.

Eine Möglichkeit der Stabilisierung der Schichtanordnung des grobkörnigen Materials stellt die Verwendung von Epoxidharz dar, das beispielsweise auf die Schichtanordnung gesprüht werden könnte. Durch Aushärten des Epoxidharzes entsteht ein Verbund, d.h. größere Mengen des grobkörnigen Materials werden miteinander verklebt. Besonders vorteilhaft im Hinblick auf eine platzsparende Lagerung und einen einfachen Einbau des Kapillarblocks ist es, wenn das grobkörnige Material in einem plattenförmigen Verbund vorliegt.

Zur Stabilisierung der Schichtanordnung des grobkörnigen Materials wird in einer anderen vorteilhaften Variante der erfindungsgemäßen Kapillarsperre vorgeschlagen, den Kapillarblock in Fom einer Matte bzw. mehrerer sich übertappender Matten auf dem Deponiehang zu verlegen, wobei das grobkörnige Material des Kapillarblocks die Füllung der Matte bildet. Um nun die Funktionsweise der Kapillarsperre zu gewährleisten, wird als Hüllmaterial der Matte ein wasserdurchlässiges Material verwendet, das den sich zwischen dem grobkörnigen Material des Kapillarblocks und dem feinkörnigen Material der Kapillarschicht ausbildenden Kapillareffekt und damit die Sperrwirkung nicht wesentlich beeinträchtigt. Die Realisierung des Kapillarblocks in Form von Matten ermöglicht einen einfachen Einbau bei gleichzeitiger Einsparung von grobkörnigem Material.

Da Unterbrechungen und Durchbrücke im Kapillarblock zu Undichtigkeiten der Kapillarsperre führen, sollte der Kapillarblock eine geschlossene Schicht bilden. Dementsprechend ist es vorteilhaft, wenn das grobkörnige Material innerhalb der Matte in einer geschlossenen Schicht angeordnet ist.

Wie bereits erwähnt, dient das Anordnen des grobkörnigen Materials in einer Matte in erster Linie als Einbauhilfe. Das grobkörnige Material des Kapillarblocks läßt sich nämlich in Form einer Matte besonders zuverlässig und einfach auf einem abzudichtenden Hang anordnen und auch in einer vorbestimmten Schichtdicke halten. Im Hinblick auf die Funktion als Einbauhilfe ist es von ganz besonderem Vorteil, wenn das Hüllmaterial der Matte zumindest über die Dauer des Einbaus und der Setzungsphase der Kapillarsperre Bestand hat. Bei dem Hüllmaterial kann es sich also sowohl um ein beständiges Material mit einer Lebensdauer bzw. Haltbarkeit von ca. 50 Jahren und mehr handeln, als auch um ein abbaubares Material, das nach dem Einbau der Matte lediglich noch die Setzungsphase überdauert und das Verrutschen des grobkörnigen Materials während dieser Setzungsphase verhindert.

Als Hüllmaterialien kommen insbesondere geotextile Gewebe in Frage. Geotextile Gewebe aus unterschiedlichsten Materialien und mit unterschiedlichster Struktur sind bereits hinlänglich aus dem Stand der Technik bekannt.

Um nun ein Verrutschen des grobkörnigen Materials innerhalb der Matte zu verhindern, könnte das Hüllmaterial der Matte in geeigneter Weise vernäht, vernadelt oder durchgesteppt sein. Hierbei ist allerdings darauf zu achten, daß das grobkörnige Material nach wie vor eine geschlossene Schicht innerhalb der Matte bildet, so daß das Ober- und Untermaterial der Matte also nicht in direktem Kontakt stehen. Eine optimale Verteilung des grobkörnigen Materials innerhalb der Matte kann in vorteilhafter Weise auch durch Einarbeiten eines Wirrgeleges erreicht werden.

Als besonders geeignet zur Realisierung einer Kapillarsperre haben sich grobkörnige Materialien erwiesen, die eine Körnung von 0,5 bis 3 mm, vorzugsweise 0,6 bis 2 mm aufweisen. Dieses grobkörnige Material für den Kapillarblock kann mit einem feinkörnigen Material für die Kapillarschicht kombiniert werden, das eine Körnung von 0,1 bis 1 mm aufweist, wie sie üblicherweise bei Feinsand und Flugsand vorliegt. Denkbar wäre aber auch die Realisierung einer Kapillarsperre mit Materialien für den Kapillarblock und die Kapillarschicht, deren Körnungen jeweils um einen im wesentlichen gleichen Betrag größer sind, als die voranstehend angegebenen Körnungen.

Sowohl das feinkörnige als auch das grobkörnige Material der Kapillarsperre sollte eluatbeständig sein, d.h. daß aus der Kapillarsperre selbst möglichst keine Schadstoffe mehr ausgewaschen werden können. Als besonders ideal haben sich Recyclingprodukte erwiesen, wie z.B. Glasgranulat aus Steinkohlekraftwerken, Glasbruch, gebrochener Basalt und Granulat aus Verbrennungsöfen, wie z.b. gebrochene Hochofenschlacke.

Besonders vorteilhaft im Zusammenhang mit der erfindungsgemäßen Kapillarsperre ist, daß hier eine Vorkonfektionierung des Kapillarblocks möglich ist, unabhängig davon, ob er in Form von Matten gebildet ist oder durch einen plattenförmigen Verbund. realisiert ist. Dabei könnte ein grobkörniges Material für den Kapillarblock verwendet werden, das einmal hinsichtlich seiner Eigenschaften und Eignung für eine Kapillarsperre getestet wird und dann ohne weiteres auch an verschiedenen Einsatzorten zur Anwendung kommen könnte. Durch Vorkonfektionierung des Kapillarblocks ließe sich schließlich auch die Einbauphase einer Kapillarsperre verkürzen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung von verschiedenen Ausführungsbeispielen der Erfindung anhand der Zeichnung zu verweisen. In Verbindung mit der Erläuterung der bevorzugten Ausführungsbeispiele der Erfindung werden auch im allgemeinen bevorzugte Ausgestaltungen und Weiterbildungen der Lehre erläutert. In der Zeichnung zeigt
- Fig. 1: den Aufbau einer einfachen Kapillarsperre entsprechend dem Stand der Technik,
- Fig. 2: den Aufbau einer erfindungsgemäßen Kapillarsperre an dem in Fig. 1 dargestellten Einsatzort und
- Figuren 3 bis 6: verschiedene Schichtaufbauten von Oberflächenabdichtungen mit Kapillarsperren.

Der in Fig. 1 dargestellte Aufbau eines Deponiehanges ist bereits in Verbindung mit dem Stand der Technik erläutert worden.

Fig. 2 zeigt einen Deponiehang mit entsprechendem Aufbau, der im wesentlichen durch die Anhäufung einer Altlast 2 gebildet ist, auf der eine Ausgleichsschicht 3 angeordnet ist. Diese Ausgleichsschicht 3 wiederum bildet den Untergrund für eine erfindungsgemäß realisierte Kapillarsperre 1 mit einem Kapillarblock 4 und einer Kapillarschicht 5, die schließlich noch von einer Wasserhaushaltsschicht 6 bedeckt ist.

Die erfindungsgemäße Kapillarsperre 1 umfaßt einen Kapillarblock 4 aus grobkörnigem Material, dessen Schichtanordnung schon vor dem Einbau stabilisiert wurde.

In dem hier dargestellten Ausführungsbeispiel wird der Kapillarblock durch eine mit grobkörnigem Material gefüllte Matte 9 gebildet, wobei das Hüllmaterial der Matte 9 wasserdurchlässig ist und die sich zwischen dem grobkörnigen Material des Kapillarblocks 4 und dem feinkörnigen Material der Kapillarschicht 5 ausbildende Sperrwirkung nicht wesentlich beeinträchtigt.

Die Dicke der Matte 9 ist so bemessen, daß hinreichend viele Kornlagen des grobkörnigen Materials zur Ausbildung der Sperrwirkung zwischen dem Kapillarblock 4 und der Kapillarschicht 5 vorhanden sind. Das grobkörnige Material ist außerdem innerhalb der Matte 9 in einer geschlossenen Schicht angeordnet. Bei dem Hüllmaterial der Matte 9 handelt es sich um ein geotextiles Gewebe, das entweder beständig sein kann oder auch nach einer gewissen Dauer, nämlich zumindest der Dauer des Einbaus der Matte 9 und der Setzungsphase der Kapillarsperre 1 bzw. des Deponiehanges insgesamt verrotten kann.

Bei dem grobkörnigen Material in der Matte 9 handelt es sich um ein Recyclingprodukt, nämlich beispielsweise um ein Glasgranulat aus einem Steinkohlekraftwerk oder um eine gebrochene Hochofenschlacke mit einer Körnung von 0,5 bis 3 mm, vorzugsweise von 0,6 bis 2 mm. Als feinkörniges Material der Kapillarschicht 4 können wahlweise Feinsande oder Flugsande mit einer Körnung von 0,1 bis 1 mm verwendet werden.

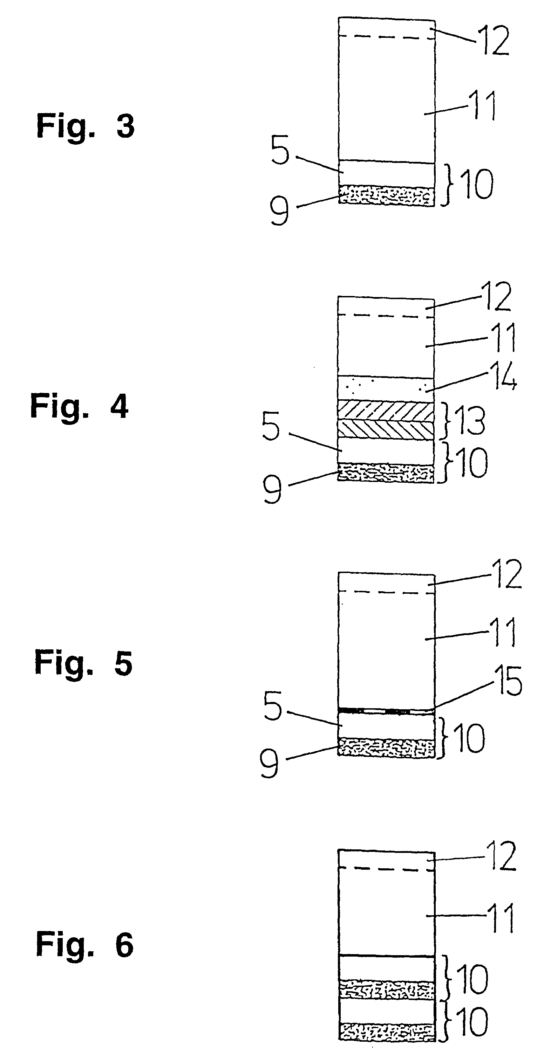

Die erfindungsgemäße Kapillarsperre kann also in einfachster Form aus einer den Kapillarblock bildenden, stabilisierten Schichtanordnung aus grobkörnigem Material bestehen, auf der direkt eine Kapillarschicht 5 aus feinkörnigem Material angeordnet ist. Diese Situation ist nochmals in Fig. 3 dargestellt. Auf der so gebildeten Kapillarsperre 10 ist eine Wasserhaushaltsschicht 11 mit Oberboden 12 angeordnet.

Die erfindungsgemäße Kapillarsperre 10 kann aber auch mit einer mineralischen Dichtung 13 ggf. noch in Verbindung mit einer Entwässerungsschicht 14 eingesetzt werden, was in den Figur 4 dargestellt ist.

Figur 5 zeigt eine Kapillarsperre 10 in Verbindung mit einer HDPE-Bahn 15 als zusätzliche Dichtungsmaßnahme. Schließlich besteht auch die Möglichkeit, mehrere Kapillarsperren 10 übereinander anzuordnen, was in Fig. 6 dargestellt ist.

Hinsichtlich weiterer, in den Figuren nicht gezeigter Merkmale der erfindungsgemäßen Kapillarsperre sei auf den allgemeinen Teil der Beschreibung verwiesen.

Abschließend sei darauf hingewiesen, daß sich die erfindungsgemäße Kapillarsperre auch in Verbindung mit anderen Dichtungsmaßnahmen, wie z.B. mit Bentonitmatten, einsetzen läßt.

## Patentansprüche

1. Kapillarsperre zur Oberflächenabdichtung, insbesondere von Deponien und Altlasten, mit mindestens einem mit einer Neigung eingebauten Kapillarblock (4), wobei der Kapillarblock (4) durch eine Schicht aus grobkömigem Material gebildet ist, und mit mindestens einer auf dem Kapillarblock (4) angeordneten Kapillarschicht (5) aus feinkörnigem Material,
**dadurch gekennzeichnet, daß** die den Kapillarblock (4) bildende Schicht im Vergleich zu konventionellen Kapillarblöcken relativ dünn ist und daß die Schichtanordnung des den Kapillarblock (4) bildenden grobkörnigen Materials schon vor dem Einbau lagestabilisiert ist.

2. Kapillarsperre nach Anspruch 1, **dadurch gekennzeichnet, daß** die Schichtanordnung des grobkörnigen Materials mit Hilfe von Epoxidharz stabilisiert ist.

3. Kapillarsperre nach Anspruch 1 oder 2, **dadurch gekennzeichnet, daß** das grobkörnige Material in einem plattenförmigen Verbund vorliegt.

4. Kapillarsperre nach einem der Ansprüche 1 bis 3, **dadurch gekennzeichnet, daß** der Kapillarblock (4) durch mindestens eine mit dem grobkörnigen Material befüllte Matte (9) realisiert ist, wobei das Hüllmaterial der Matte (9) wasserdurchlässig ist und die sich zwischen dem grobkörnigen Material des Kapillarblocks (4) und dem feinkörnigen Material der Kapillarschicht (5) ausbildende Sperrwirkung nicht wesentlich beeinträchtigt und daß das grobkörnige Material innerhalb der Matte (9) in einer geschlossenen Schicht angeordnet ist.

5. Kapillarsperre nach Anspruch 4, **dadurch gekennzeichnet, daß** das Hüllmaterial der Matte (9) zumindest über die Dauer des Einbaus und der Setzungsphase der Kapillarsperre (1) Bestand hat.

6. Kapillarsperre nach einem der Ansprüche 4 oder 5, **dadurch gekennzeichnet, daß** ein geotextiles Gewebe als Hüllmaterial der Matte (9) dient und daß das Hüllmaterial vernäht, vernadelt oder durchgesteppt ist.

7. Kapillarsperre nach einem der Ansprüche 4 bis 6, **dadurch gekennzeichnet, daß** ein Wirrgelege in die Matte (9) eingearbeitet ist.

8. Kapillarsperre nach einem der Ansprüche 4 bis 7, **dadurch gekennzeichnet, daß** die Matte (9) vorkonfektioniert ist.

9. Kapillarsperre nach einem der Ansprüche 1 bis 8, **dadurch gekennzeichnet, daß** das grobkörnige Material eine Körnung von 0,5 bis 3 mm, vorzugsweise von 0,6 bis 2 mm, aufweist und daß das feinkörnige Material eine Körnung von 0,1 bis 1 mm aufweist.

10. Kapillarsperre nach einem der Ansprüche 1 bis 9, **dadurch gekennzeichnet, daß** das grobkörnige Material eluatbeständig ist und aus Recycling-Produkten oder aus Glasgranulat, Glasbruch, gebrochener Hochofenschlacke oder gebrochenem Basalt besteht.

## Claims

1. Capillary barrier for surface sealing, in particular of waste disposal sites and abandoned polluted areas, having at least one capillary block (4) which is installed at an angle, the capillary block (4) being formed by a layer of coarse-grained material, and having at least one capillary layer (5) of fine-grained material which is arranged on the capillary block (4), **characterised in that** the layer which forms the capillary block (4) is relatively thin in comparison with conventional capillary blocks and **in that** the layer arrangement of the coarse-grained material which forms the capillary block (4) is already positionally stabilised before the installing operation.

2. Capillary barrier according to claim 1, **characterised in that** the layer arrangement of the coarse-grained material is stabilised by means of epoxy resin.

3. Capillary barrier according to claim 1 or 2, **characterised in that** the coarse-grained material is present in a sheet-like composite structure.

4. Capillary barrier according to any one of claims 1 to 3, **characterised in that** the capillary block (4) is in the form of at least one mat (9) which is filled with the coarse-grained material, the encasing material of the mat (9) being water-permeable and not substantially impairing the barrier effect which is produced between the coarse-grained material of the capillary block (4) and the fine-grained material of the capillary layer (5), and **in that** the coarse-grained material within the mat (9) is arranged in a closed layer.

5. Capillary barrier according to claim 4, **characterised in that** the encasing material of the mat (9) lasts at least for the duration of the installing operation and the settling phase of the capillary barrier (1).

6. Capillary barrier according to either claim 4 or claim 5, **characterised in that** a geotextile fabric is used as the encasing material of the mat (9) and **in that** the encasing material is sewn, needled or through-stitched.

7. Capillary barrier according to any one of claims 4 to 6, **characterised in that** a matted fabric is incorporated into the mat (9).

8. Capillary barrier according to any one of claims 4 to 7, **characterised in that** the mat (9) is prefabricated.

9. Capillary barrier according to any one of claims 1 to 8, **characterised in that** the coarse-grained material has a grain size of from 0.5 to 3 mm, preferably from 0.6 to 2 mm, and **in that** the fine-grained material has a grain size of from 0.1 to 1 mm.

10. Capillary barrier according to any one of claims 1 to 9, **characterised in that** the coarse-grained material is eluate-resistant and comprises recycling products or granulated glass, crushed glass, crushed blast furnace slag or crushed basalt.

## Revendications

1. Barrière capillaire d'étanchéification superficielle, en particulier de dépôts de déchets et de charges hors d'usage, avec au moins un bloc capillaire (4) monté avec une inclinaison, le bloc capillaire (4) étant formé par une couche en matériau à grains gorssiers, et avec au moins une couche capillaire (5) en matériau à grains fins disposée sur le bloc capillaire (4),
**caractérisée en ce que** la couche formant le bloc capillaire (4) est relativement mince en comparaison à des blocs capillaires conventionnels et que la disposition en couche du matériau à grains grossiers formant le bloc capillaire (4) est stabilisée en position dès avant le montage.

2. Barrière capillaire selon la revendication 1,
**caractérisée en ce que** la disposition en couche du matériau à grains grossiers est stabilisée à l'aide d'une résine époxy.

3. Barrière capillaire selon la revendication 1 ou 2,
**caractérisée en ce que** le matériau à grains grossiers est présent dans un composite en forme de plaque.

4. Barrière capillaire selon l'une des revendications 1 à 3,
**caractérisée en ce que** le bloc capillaire (4) est réalisé par au moins un mat (9) rempli du matériau à grains grossiers, le matériau d'enveloppe du mat (9) étant perméable à l'eau et n'affectant sensiblement pas l'effet barrière se développant entre le matériau à grains grossiers du bloc capillaire (4) et le matériau à grains fins de la couche capillaire (5), et **en ce que** le matériau à grains grossiers est disposé à l'intérieur du mat (9) dans une couche fermée.

5. Barrière capillaire selon la revendication 4,
**caractérisée en ce que** le matériau d'enveloppe du mat (9) a une stabilité au moins sur la durée du montage et de la phase de tassement de la barrière capillaire (1).

6. Barrière capillaire selon l'une des revendications 4 et 5,
**caractérisée en ce qu'**un tissu géotextile sert de matériau d'enveloppe du mat (9) et que le matériau d'enveloppe est fermé par couture, aiguilleté ou piqué.

7. Barrière capillaire selon l'une des revendications 4 à 6,
**caractérisée en ce qu'**une couche emmêlée est enfoncée dans le mat (9).

8. Barrière capillaire selon l'une des revendications 4 à 7,
**caractérisée en ce que** le mat (9) est préconfectionné.

9. Barrière capillaire selon l'une des revendications 1 à 8,
**caractérisée en ce que** le matériau à grains grossiers présente une granulométrie de 0,5 à 3 mm, de préférence de 0,6 à 2 mm et que le matériau à grains fins présente une granulométrie de 0,1 à 1 mm.

10. Barrière capillaire selon l'une des revendications 1 à 9,
**caractérisée en ce que** le matériau à grains grossiers est résistant à l'élution et est constitué de produits de recyclage ou de granulés de verre, de calcin, de scories de haut-fourneau concassées ou de basalte concassé.
